# EUROPEAN PATENT APPLICATION

(11) **EP 1 106 852 A2**
(43) Date of publication of application: **13.06.2001**
(21) Application number: 00310540.0
(22) Date of filing: 28.11.2000
(51) Int. Cl.: F16D 3/06, B24B 39/04

(54) **Method of manufacturing a slip yoke**

(30) Priority: 01.12.1999 US 452568
(71) Applicant: DANA CORPORATION, Toledo, OH 43606 (US)
(72) Inventor: Larochelle, Paul, Ft. Wayne, Indiana 46804 (US); Wagner, Brad W., Yorktown, Indiana 47396 (US)
(74) Representative: Giles, Ashley Simon

(57) **Abstract**

A method for manufacturing a slip yoke (20) for use with a transmission (10) in a vehicle drive train assembly includes an initial step of near net forming an unfinished slip yoke (20), such as forging or casting. Portions of the slip yoke (20) may be finished machined, if necessary. Then, an outer surface (22) of the slip yoke (20) is subjected to a burnishing process. Burnishing is a metal working process wherein one or more rollers are moved into engagement with the outer surface (22) of the lip yoke (20) as it is rotated. The pressure generated by the rollers re-shapes the outer surface (22) of the slip yoke (20) to a very smooth surface without the removal of material. The result is a tough, work hardened, wear-resistant, and corrosion-resistant surface for the outer surface (22) of the slip yoke (20), having a mirror-like smooth finish. Lastly, the burnished slip yoke (20) is installed on an output shaft (15) of a transmission (10), wherein it is engaged by a seal (13). Slip yokes (20) manufactured in accordance with the burnishing process of this invention have been found to provide significantly better results than slip yokes (20) manufactured using the prior art grinding method.

## Description

### BACKGROUND OF THE INVENTION

This invention relates in general to drive train assemblies for transferring rotational power from an engine to an axle assembly in a vehicle. In particular, this invention relates to an improved method for manufacturing a yoke, such as a slip yoke, for use in such a vehicle drive train assembly.

In most land vehicles in use today, a drive train assembly is provided for transmitting rotational power from an output shaft of an transmission to an input shaft of an axle assembly so as to rotatably drive one or more wheels of the vehicle. To accomplish this, a typical vehicular drive train assembly includes a hollow cylindrical driveshaft tube. A first universal joint is connected between the output shaft of the transmission and a first end of the driveshaft tube, while a second universal joint is connected between a second end of the driveshaft tube and the input shaft of the axle assembly. The universal joints provide a rotational driving connection from the output shaft of the transmission through the driveshaft tube to the input shaft of the axle assembly, while accommodating a limited amount of angular misalignment between the rotational axes of these three shafts.

In many instances, the output shaft of the transmission is formed as a generally cylindrical member including an end having an externally splined outer surface. To connect the first universal joint to the output shaft of the transmission, a slip yoke is provided. A typical slip yoke includes a generally hollow cylindrical body portion having a smooth outer surface and an internally splined inner surface. The internally splined inner surface of the body portion of the slip yoke cooperates with the externally splined outer surface of the output shaft of the transmission to provide a rotatable driving connection therebetween, while allowing a limited amount of relative axial movement to occur. The slip yoke further includes a yoke portion having a pair of arms extending therefrom. The arms of the yoke portion having aligned openings formed therethrough that are adapted to receive portions of the first universal joint therein.

Typically, the transmission is contained within a housing, and the output shaft of the transmission extends through an opening formed through the transmission housing. To prevent the entry of dirt, water, and other contaminants into the transmission, and further prevents transmission fluid contained within the transmission housing from leaking outwardly therefrom, an annular seal is usually provided in the opening of the transmission housing. The annular seal includes an outer circumferential surface that is fixed within the opening formed through the transmission housing and an inner circumferential surface that bears against the outer cylindrical surface of the slip yoke as it rotates during use. Thus, the annular seal prevents the entry of dirt, water, and other contaminants into the transmission housing, and further prevents transmission fluid contained within the transmission housing from leaking outwardly therefrom.

To facilitate the extended use of the annular seal, it is important that the outer surface of the slip yoke be formed having an extremely smooth finish. In the past, this has been accomplished by grinding the outer surface of the slip yoke. Grinding is a metal working process wherein a tool is moved into engagement with the outer surface of the slip yoke as it is rotated at a relatively high speed, thereby causing the removal of material therefrom to form a smooth finish. Although grinding the outer surface of the slip yoke has been an effective method of forming a smooth finish on the outer surface of the slip yoke, it has been found to have several limitations. In particular, the grinding process imparts certain dimensional and surface characteristics to the outer surface of the slip yoke that limit the useful life span of the annular seal bearing thereagainst. Thus, it would be desirable to provide an improved method for manufacturing a slip yoke for use in a vehicle drive train assembly that is quick and inexpensive, yet which provides improved dimensional and surface characteristics on the outer surface of the slip yoke that extend the useful life span of the annular seal bearing thereagainst.

### SUMMARY OF THE INVENTION

This invention relates to an improved method for manufacturing a yoke, such as a slip yoke, for use with a transmission or other component in a vehicle drive train assembly. Initially, an unfinished slip yoke is near net formed using any conventional process, such as forging or casting. Portions of the slip yoke may be finished machined, if necessary. Then, an outer cylindrical surface of the slip yoke is subjected to a burnishing process. Burnishing is a metal working process wherein one or more rollers are moved into engagement with the outer surface of the slip yoke as it is rotated. The pressure generated by the rollers re-shapes the outer surface of the slip yoke to a very smooth surface without the removal of material. The result is a tough, work hardened, wear-resistant, and corrosion-resistant surface for the outer surface of the slip yoke, having a mirror-like smooth finish. Lastly, the burnished slip yoke is installed on an output shaft of a transmission, wherein the outer surface thereof is engaged by an annular seal. Testing has indicated that slip yokes manufactured in accordance with the burnishing process of this invention provide significantly better results than slip yokes manufactured using the prior art grinding method.

Various objects and advantages of this invention will become apparent to those skilled in the art from the following detailed description of the preferred embodiment, when read in light of the accompanying drawings.

### BRIEF DESCRIPTION OF THE DRAWINGS

Fig. 1 is a fragmentary sectional elevational view of a portion of a vehicle transmission including a slip yoke that has been manufactured in accordance with the method of this invention.

Fig. 2 is an elevational view, partially in cross section, of an apparatus for burnishing the outer cylindrical surface of the body portion of the slip yoke illustrated in Fig. 1.

Fig. 3 is a flow chart of a method in accordance with this invention for manufacturing the slip yoke illustrated in Figs. 1 and 2.

### DETAILED DESCRIPTION OF THE PREFERRED EMBODIMENT

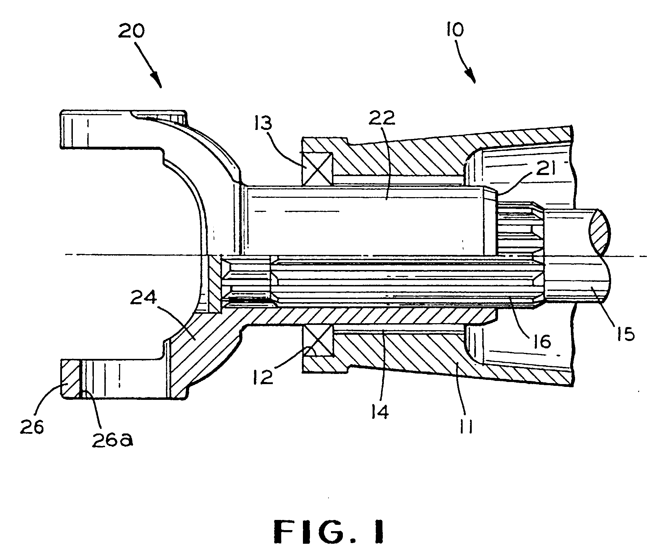

Referring now to the drawings, there is illustrated in Fig. 1 a portion of a vehicle transmission, indicated generally at 10, that is generally conventional in the art. The structure and method of operation of the transmission 10 are well known and form no part of this invention. Thus, only those portions of the transmission 10 that are necessary for a full understanding of this invention are described and illustrated. The illustrated transmission 10 includes a housing 11 having an opening 12 formed therethrough. An annular seal 13 is mounted in the opening 12 of the transmission housing 11. A bearing 14 is also provided in the opening 12 of the transmission housing 11. The purposes for the annular seal 13 and the bearing 14 will be explained below.

The transmission 10 also includes an output shaft 15 having a first end (not shown) that is supported for rotation in a conventional manner within the transmission housing 11. The output shaft 15 has a second end 16 that extends through the opening 12 and outwardly from the transmission housing 11. The second end 16 of the output shaft 15 has a plurality of splines formed on the exterior surface thereof for a purpose that will be described below.

The transmission 10 further includes an input shaft (not shown) and a plurality of gears (not shown), all of which are contained within the transmission housing 11. The input shaft is usually connected to a source of rotational power, such as an engine of a vehicle, so as to be rotatably driven thereby. A conventional shifting mechanism (not shown) is provided for selectively connecting certain ones of the plurality of gears between the input shaft and the output shaft 12. As a result, the output shaft 12 can be selectively driven at any one of a plurality of speed reduction gear ratios relative to the rotational speed of the input shaft.

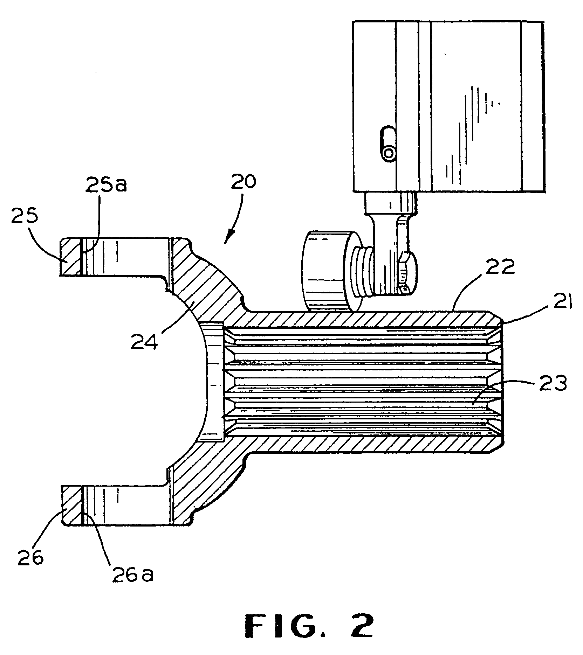

A slip yoke, indicated generally at 20, is provided to connect the output shaft 15 of the transmission 10 to a first universal joint (not shown) carried on a first end of the driveshaft tube of a vehicle drive train assembly. The slip yoke 20 includes a generally hollow cylindrical body portion 21 having a smooth outer cylindrical surface 22 and an internally splined inner surface 23 (see Fig. 2). The internally splined inner surface 23 of the body portion 21 of the slip yoke 20 cooperates with the externally splined outer surface of the second end 16 of the output shaft 15 of the transmission 10 to provide a rotatable driving connection therebetween, while allowing a limited amount of relative axial movement to occur. The slip yoke 20 further includes a yoke portion 24 having a pair of arms 25 and 26 extending therefrom. The arms 25 and 26 of the yoke portion 24 having respective aligned openings 25a and 26a formed therethrough that are adapted to receive portions of the first universal joint therein in a known manner.

The slip yoke 20 can be installed on the transmission 10 by inserting the hollow cylindrical body portion 21 through the annular seal 13 and the bearing 14 provided in the opening 12 formed through the transmission housing 11. When so installed, the cylindrical body portion 21 of the slip yoke 20 is rotatably supported on the transmission housing 11 by the bearing 14. At the same time, the annular seal 13 sealingly engages the cylindrical outer surface 22 of the body portion 21 of the slip yoke 20. Thus, the annular seal 13 prevents the entry of dirt, water, and other contaminants into the transmission housing 11, and further prevents transmission fluid contained within the transmission housing 11 from leaking outwardly therefrom.

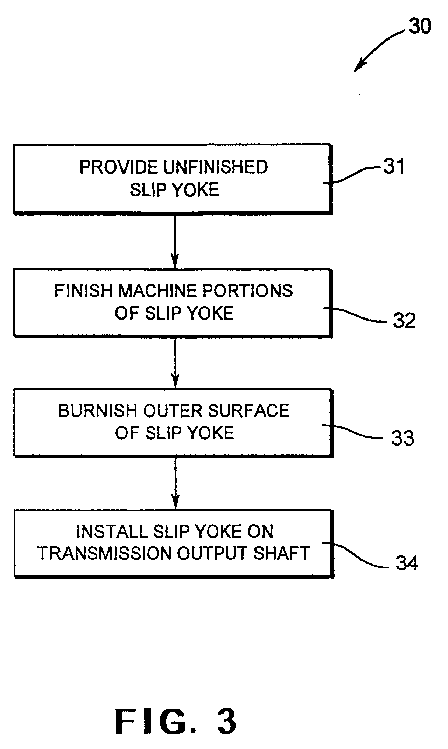

Fig. 3 is a flow chart of a method, indicated generally at 30, in accordance with this invention for manufacturing the slip yoke 20 illustrated in Figs. 1 and 2. As shown therein, the method 30 includes a first step 31, wherein an unfinished slip yoke 20 is initially provided. The unfinished slip yoke 20 may be formed in any conventional manner, such as by forging or casting. Preferably, the unfinished slip yoke 20 is near net formed to approximately its desired final shape. In a second optional step 32 of the method, portions of the unfinished slip yoke 20 are finished machined if necessary. For example, it may be necessary or desirable to finish machine certain portions of the unfinished slip yoke 20, including portions of the outer cylindrical surface 22, the internally splined inner surface 23, and the yoke arms 25 and 26. Next, a third step 33 is performed wherein the outer cylindrical surface 22 of the unfinished slip yoke 20 is subjected to a burnishing process. Burnishing is a metal working process wherein one or more rollers are moved into engagement with the outer cylindrical surface 22 of the unfinished slip yoke 20 as it is rotated. The pressure generated by the rollers re-shapes the outer cylindrical surface 22 of the slip yoke 20 to a very smooth surface without the removal of material. The result is a tough, work hardened, wear-resistant, and corrosion-resistant surface for the outer cylindrical surface 22 of the slip yoke 20, having a mirror-like smooth finish. In the last step 34 of the method 30, the burnished slip yoke 20 is installed on the second end 16 of the output shaft 15 of the transmission 10 as described above.

Fig. 2 schematically illustrates an apparatus, indicated generally at 40, for performing the burnishing step 33 of the method 30 illustrated in Fig. 3. The illustrated apparatus 40 is intended to be representative of any machine that can perform the burnishing step 33 described above. The illustrated burnishing apparatus 40 is an outside surface, carbide roller apparatus, such as is available from Elliot Tool Technologies Ltd. of Dayton, Ohio. The burnishing operation is performed by mounting the unfinished slip yoke 20 on a fixture (not shown) and causing it to rotate at a relatively high speed. Then, one or more rollers 41 or other burnishing tools are caused to move into engagement with the outer cylindrical surface 22 of the unfinished slip yoke 20. The rollers 41 are preferably formed from a relatively hard material and exert a relatively high pressure against the outer cylindrical surface 22 of the unfinished slip yoke 20. The pressure generated by the rollers 41 re-shapes the material at the outer cylindrical surface 22 of the unfinished slip yoke 20 to have an extremely smooth finish. The resulting burnished outer cylindrical surface 22 of the slip yoke 20 is tough, work-hardened, wear-resistant, and corrosion-resistant, having a mirror-like finish.

Burnishing the outer cylindrical surface 22 of the slip yoke 20 in accordance with this invention has been found to provide significant advantages over the prior art method of grinding such outer cylindrical surface 22. Specifically, testing has indicated that slip yokes 20 manufactured in accordance with the burnishing process of this invention provide significantly better results than slip yokes manufactured using the prior art grinding method.

Although this invention has been described and illustrated in the context of a slip yoke for a transmission, it will be appreciated that this invention may be utilized with other types of yokes that are employed in a drive train assembly. For example, as described above, a typical vehicular drive train assembly includes a driveshaft having a first end that is connected to the output shaft 15 of the transmission 10 (by means of the slip yoke 20) and a second end that is connected to an input shaft (not shown) of an axle assembly. An end yoke (not shown) is connected to the input shaft of the axle assembly to facilitate this connection. Such an end yoke is quite similar to the slip 20 described above, including a cylindrical body portion having a smooth outer cylindrical surface that extends through an opening formed through the housing of the axle assembly and that is sealingly engaged by an annular seal. However, the end yoke of the axle assembly is typically restrained from axial movement relative to the input shaft of the axle assembly. In the manner described above, the cylindrical body portion ofthe end yoke can be burnished to provide a smooth outer cylindrical surface in accordance with this invention.

In accordance with the provisions of the patent statutes, the principle and mode of operation of this invention have been explained and illustrated in its preferred embodiment. However, it must be understood that this invention may be practiced otherwise than as specifically explained and illustrated without departing from its spirit or scope.

## Claims

1. A method of manufacturing a yoke (20) for use in a drive train assembly (10) comprising the steps of:
(a) providing a yoke (20) including a body portion (21) having an outer surface (22) and a yoke portion (24) having a pair of yoke arms (25, 26) extending therefrom; and
(b) subjecting the outer surface (22) of the slip yoke to a burnishing operation.

2. The method defined in claim 1 wherein said step (a) is performed by providing a body portion (21) having a splined inner surface (23).

3. The method defined in claim 1 wherein said step (a) is performed by providing a slip yoke (20) including a body portion (21) having a splined inner surface (23).

4. The method defined in claim 1 wherein said step (a) is performed by providing the yoke arms (25, 26) with respective aligned openings (25a, 26a).

5. A method of manufacturing a combined transmission and slip yoke assembly comprising the steps of:
(a) providing a transmission (10) including a housing (11), a seal (13) mounted in an opening (12) formed through the housing (11), and an output shaft (15) having an externally splined outer surface;
(b) providing a slip yoke (20) including a first end having an internally splined portion (21) and an outer surface (22), and a second end having a pair of yoke arms (25, 26) extending therefrom; and
(c) subjecting the outer surface (22) of the slip yoke (20) to a burnishing operation; and
(d) installing the slip yoke (20) on the transmission (10) such that the externally splined outer surface of the output shaft (12) cooperates with the internally splined inner surface (23) of the slip yoke (20), and such that the seal (13) bears against the outer surface (22) of the slip yoke (20).
